# EUROPÄISCHE PATENTSCHRIFT

(11) **EP 1 236 169 B1**
(45) Veröffentlichungstag und Bekanntmachung des Hinweises auf die Patenterteilung: **18.02.2004**
(21) Anmeldenummer: 99966832.0
(22) Anmeldetag: 07.12.1999
(51) Int. Cl.: G06K 19/067

(54) **WARENETIKETT**
GOODS LABEL
ETIQUETTE POUR MARCHANDISE

(43) Veröffentlichungstag der Anmeldung: 04.09.2002
(73) Patentinhaber: Infineon Technologies AG, 81669 München (DE)
(72) Erfinder: FRIES, Manfred, D-94336 Hunderdorf (DE); HOUDEAU, Detlef, D-84085 Langquaid (DE)
(74) Vertreter: Schweiger, Martin, Dipl.-Ing.
(86) Internationale Anmeldenummer: PCT/DE1999/003903
(87) Internationale Veröffentlichungsnummer: WO 2001/043064

(56) Entgegenhaltungen:
- EP-A- 0 513 456
- WO-A-96/10803
- DE-A- 4 435 815
- US-A- 5 142 270
- US-A- 5 779 839

## Beschreibung

Die Erfindung betrifft ein Warenetikett, welches sich insbesondere für die kontaktlose Identifikation einer Ware, wie beispielsweise bei einer Inventur, sowie für die Waren- und vor allem Diebstahlsicherung eignet. Das Etikett ist zudem besonders fälschungssicher. Warenetiketten mit einem Chip, dessen Informationen mit einer Antenne.an ein Lesegerät gesendet werden, sind z. B. aus US 5779839 bekannt.

Beim Verkauf, der Lagerung und dem Sortieren von Waren sowie bei der Überprüfung von Warenbeständen gibt es eine Vielzahl von Anwendungen, bei denen es erwünscht ist, daß eine Ware nur eine bestimmte Anzahl und insbesondere nur ein einziges Mal einem bestimmten Bearbeitungsvorgang unterzogen wird. Dies trifft beispielsweise auf die Inventur eines Warenbestandes zu, bei welchem eine bestimmte Ware nur einmal gezählt werden soll. Auch beim kassieren soll der Preis für die Ware nur ein einziges Mal in der Kasse verbucht werden. Bei teuren Waren ist es zudem üblich, die Ware mit einer Diebstahlsicherung zu versehen, welche beim Verlassen des Geschäfts einen Alarm auslöst, wenn die Sicherung nicht entfernt wurde. Üblicherweise geschieht dies an der Kasse, nachdem der Preis für die Ware bezahlt wurde. Bei der gegenwärtig üblichen Praxis ist es jedoch nicht ausgeschlossen, daß trotz Verbuchen des Kaufpreises in der Kasse und trotz Bezahlung der Ware die Diebstahlsicherung versehentlich an der Ware verbleibt.

Ein Warenetikett, bei dem beim Durchlauf durch eine Kontrollstelle ein Resonanzkreis angeregt wird, ist in der US 5142270 beschrieben. Der Resonanzkreis ist mit einer Sollbruchstelle versehen, so daß mittels eines Energiestoßes der Resonanzkreis zerstört werden kann und das Etikett unwirksam wird. Das Etikett enthält keine Information über die Ware.

Aufgabe der Erfindung ist es, ein Warenetikett zu schaffen, welches Informationen über die Ware enthält und bei dem diese Information nur mit einer vorgegebenen Häufigkeit mit Hilfe eines Lesegerätes ausgelesen werden kann. Das Warenetikett sollte zudem auf einfache Weise und kostengünstig herstellbar sein und ein Höchstmaß an Fälschungssicherheit bieten.

Die Lösung der Aufgabe gelingt mit dem Warenetikett gemäß Anspruch 1. Die Erfindung betrifft weiterhin ein Verfahren zur Herstellung dieses Warenetiketts gemäß Anspruch 16 sowie seine Verwendung gemäß Anspruch 20. Weiterbildungen und Verfahrensvarianten ergeben sich aus den Unteransprüchen.

Die Erfindung betrifft also ein Warenetikett, welches einen Halbleiterchip sowie eine Antenne umfaßt. Mittels dieser Antenne ist im Halbleiterchip über die Ware gespeicherte Information an ein Lesegerät übertragbar. Erfindungsgemäß weist die Antenne eine Sollbruchstelle auf, in deren Bereich die Antenne beim Lesevorgang, nachdem die Information sooft, wie dies gewünscht wurde, ausgelesen wurde, durch vom Lesegerät eingebrachte Energie zerstört wird. Beispielsweise kann die Anzahl der Zyklen, mit welchen das Lesegerät das Etikett liest, bevor die zur Zerstörung der Antenne erforderliche Energie eingebracht wird, fest vorgegeben sein. Es können auch verschiedene Arten von Lesegeräten verwendet werden, nämlich einerseits solche, welche das Etikett nicht zerstören, und solche, welche nach z.B. einmaligem Auslesen die zur Zerstörung der Antenne benötigte Energie einstrahlen. Nach der Zerstörung der Antenne im Bereich der Sollbruchstelle ist die im Halbleiterchip gespeicherte Information über die Ware nicht mehr an das Lesegerät übertragbar. Das Warenetikett ist daher nach dem Einbringen der Energie durch das Lesegerät nicht mehr lesbar.

Auf diese Weise kann beispielsweise sichergestellt werden, daß beim Durchführen einer Inventur eine mit dem erfindungsgemaßen Warenetikett gekennzeichnete Ware nur einmal gezählt und erfaßt werden kann. Gleiches gilt auch beim Kassieren des Warenpreises, da nach einmaligem Lesen des Warenetiketts ein weiteres Einbuchen in die Kasse nicht mehr möglich ist. Wird das erfindungsgemäße Warenetikett in Kombination mit einem Diebstahlmelder verwendet, der beispielsweise auf eine von der Antenne des erfindungsgemäßen Warenetiketts ausgesendete Frequenz reagiert und daraufhin einen Warnton oder ähnliches aussendet, kann diese Diebstahlwarnung nur erfolgen, wenn das Warenetikett nicht mit dem zugehörigen Lesegerät (der Kasse) ausgelesen worden ist. Hat der Kunde dagegen, wie vorgesehen, die gekennzeichnete Ware an der Kasse bezahlt, ist durch den Lesevorgang auch gleichzeitig die Diebstahlsicherung deaktiviert, so daß kein Alarm mehr ausgelöst wird. Ein gesonderter Vorgang zur Entfernung der Diebstahlsicherung ist nicht mehr erforderlich.
Da die Information über die Ware im erfindungsgemäßen Warenetikett in einem Halbleiterchip abgespeichert ist, sind Fälschungen dieser Information praktisch ausgeschlossen.

Das Warenetikett kann aber auch so genutzt werden, daß beim Zählen der Waren während einer Inventur die zur Zerstörung der Antenne erforderliche Energie nicht in das Etikett eingebracht wird und dieses also auslesbar bleibt. Der Warenpreis kann dann an einer Kasse noch ermittelt werden. Die Zerstörung der Antenne erfolgt zweckmäßig nach dem Einbuchen des Warenpreises in die Kasse durch Energieeinstrahlung mit einer geeigneten Frequenz durch das Kassenlesegerät.

Das erfindungsgemäße Warenetikett kann als Antenne entweder eine Stabantenne oder eine Antennenspule enthalten. Außerdem ist es möglich, daß das Warenetikett nicht nur eine, sondern eine weitere Antenne umfaßt. Dies kann insbesondere dann zweckmäßig sein, wenn die Reichweite der Antenne vergrößert werden soll.

Bevorzugt weist das erfindungsgemäße Warenetikett eine Antennenspule auf, welche mit einer Stabantenne kapazitiv gekoppelt ist. Die Sollbruchstelle kann dann entweder in der Antennenspule oder in der Stabantenne vorhanden sein. Vorzugsweise ist das erfindungsgemäße Warenetikett so ausgebildet, daß die Sollbruchstelle in der Antennenspule vorhanden und letztere kurzgeschlossen ist.
Der Halbleiterchip, welcher die Information über die Ware enthält, kann entweder mit der Stabantenne oder mit der Antennenspule elektrisch leitend kontaktiert sein. Mit Hinblick auf die Herstellung des erfindungsgemäßen Warenetiketts erfolgt die elektrische Kontaktierung vorzugsweise mit der Stabantenne.

Die Sollbruchstelle in der Antenne oder einer der Antennen des erfindungsgemäßen Warenetiketts ist zweckmäßig so ausgebildet, daß die vom Lesegerät in die Antenne eingebrachte Energie mit Sicherheit dazu ausreicht, die Antenne im Bereich der Sollbruchstelle zu zerstören. Bevorzugt besteht die Sollbruchstelle in einer Verengung des Antennenquerschnitts.

Die Antenne(n) kann (können) grundsätzlich aus allen geeigneten elektrisch leitenden Materialien hergestellt sein. Insbesondere eignen sich diejenigen Materialien, die für Antennen bei kontaktlosen Chipkarten eingesetzt werden. Vom Standpunkt der Herstellbarkeit und des Preises aus eignet sich als Material für eine Stabantenne besonders ein Faden oder Band aus elektrisch leitfähigem Kunststoff. Derartige Materialien sind grundsätzlich bekannt. Es handelt sich um elektrisch leitfähige Teilchen (Metalle oder metallisch beschichtete Teilchen), die auf einen Kunststoff aufgetragen oder in eine Kunststcffmatrix eingebettet sind.

Als Grundmaterial für das erfindungsgemäße Warenetikett kann grundsätzlich jedes für Etiketten verwendete Material eingesetzt werden. Besonders geeignet als Grundkörper des erfindungsgemäßen Warenetiketts sind Folien aus Kunststoff und insbesondere Gießfolien.

In bevorzugten Varianten der Erfindung ist die Stabantenne in den Grundkörper des Warenetiketts eingebettet. Gleiches gilt für den Halbleiterchip. Im Falle einer Antennenspule kann es jedoch zweckmäßiger sein, diese auf den Grundkörper aufzudrucken.

Die erfindungsgemäßen Warenetiketten können auf jede bekannte Art und Weise an der zugehörigen Ware befestigt werden. Bevorzugt werden die Etiketten auf die Ware aufgeklebt. Hierzu kann eine der Oberflächen des erfindungsgemäßen Warenetiketts mit einem Klebstoff beschichtet sein.

Um zu verhindern, daß die erfindungsgemäßen Warenetiketten von den Waren entfernt und auf anderen Waren wiederverwendet werden können, sind die erfindungsgemäßen Etiketten zweckmäßig so ausgebildet, daß sie nicht einstückig von der gekennzeichneten Ware entfernbar sind.

Das erfindungsgemäße Warenetikett wird zweckmäßig nach dem folgenden Verfahren hergestellt:
Zunächst werden Halbleiterchips auf einem Antennenfaden oder einem Antennenband befestigt, welches mehrere Stabantennen umfaßt. Pro Stabantenne, welche im Antennenfaden oder Antennenband enthalten ist, wird ein Halbleiterchip befestigt. Anschließend werden zwischen dem jeweiligen Halbleiterchip und der zugehörigen Stabantenne die elektrisch leitenden Kontakte hergestellt. Dies kann auf an sich bekannte Weise erfolgen, beispielsweise unter Verwendung von Bonddrähten oder durch Lothügel, elektrisch leitfähigen Klebstoff oder ähnliches.

In einem weiteren Verfahrensschritt wird dann die im vorstehenden Schritt erhaltene Stabantennenvorstufe.in den Warenetikett-Grundkörper eingebettet. Als Grundkörper dient eine Gießfolie. Beim Gießen der Folie wird die Stabantennenvorstufe so angeordnet, daß pro Grundkörper, welcher in der Gießfolie umfaßt ist, eine Stabantenne mit dem auf ihr befestigten Halbleiterchip vorhanden ist. Die Herstellung von Gießfolien und die einsetzbaren Kunststoffe sind dem Fachmann bekannt und müssen deshalb hier nicht näher erläutert werden.
Im letzten Schritt des Verfahrens werden die erfindungsgemäßen Warenetiketten vereinzelt. Dies geschieht vorzugsweise mit einem Stanzvorgang.

Vor dem Vereinzeln der Warenetiketten kann auf eine der Oberflächen der Grundkörper, welche in der Gießfolie umfaßt sind, eine weitere Antenne, beispielsweise eine Antennenspule aufgedruckt werden. Dies kann, wie erwähnt, zweckmäßig sein, wenn die Reichweite, mit welcher vom erfindungsgemäßen Warenetikett Information auf ein Lesegerät übertragen wird, erhöht werden soll.

Wenn das erfindungsgemäße Warenetikett als Klebeetikett eingesetzt werden soll, kann vor dem Vereinzeln der Warenetiketten und gegebenenfalls nach dem Aufdrucken einer weiteren Antennen auf eine der Oberflächen des Warenetikett-Grundkörpers eine Klebstoffschicht aufgebracht werden. Zur Vereinfachung der Herstellung ist es zweckmäßig, eine Oberfläche der gesamten Gießfolie mit einer Klebstoffschicht zu überziehen und dann die einzelnen Etiketten aus der Folie auszustanzen.

Die Erfindung soll nachfolgend anhand von Zeichnungen näher beschrieben werden. Darin zeigen schematisch:
- Fig. 1 bis 3: Draufsichten auf verschiedene Beispiele erfindungsgemäßer Warenetiketten und
- Fig. 4: verschiedene Vor- und Zwischenstufen bei der Herstellung eines erfindungsgemäßen Warenetiketts nach dem erfindungsgemäßen Verfahren.

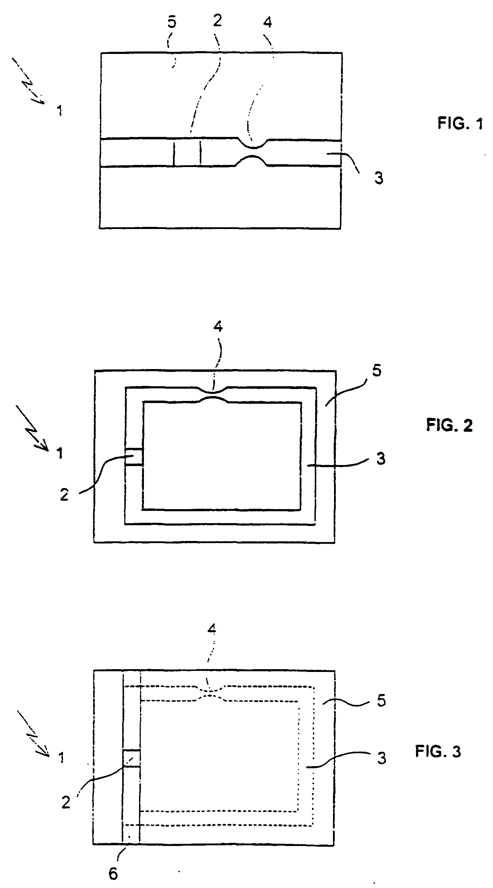

Fig. 1 zeigt ein erfindungsgemäßes Warenetikett 1 mit einem Grundkörper 5, der hier aus einer Gießfolie besteht. Diese Gießfolie ist aus einem Kunststoff mit geringer Reißfestigkeit hergestellt, so daß sich das Warenetikett 1, nachdem es auf eine Ware aufgeklebt wurde, von dieser nicht mehr einstückig entfernen läßt, da die Folie beim Abziehen zerreißt. In den Grundkörper 5 eingebettet ist ein Halbleiterchip 2, welcher Information über die Ware, auf welcher das erfindungsgemäße Etikett befestigt werden soll, gespeichert enthält. Die Information kann beispielsweise in der Art der Ware, der Artikelnummer und ihrem Preis bestehen. Die Information ist mit einer Stabantenne 3, auf welcher der Halbleiterchip befestigt und mit welcher er elektrisch leitend kontaktiert ist, an ein geeignetes Lesegerät übertragbar.

Im Bereich der Stabantenne 3 ist eine Sollbruchstelle 4 ausgebildet. Sie besteht in einer Verengung des Antennenquerschnitts. Diese Sollbruchstelle 4 ist so ausgebildet, daß die Antenne in ihrem Bereich zerstört wird, wenn beim Lesevorgang nach Auslesen der im Halbleiterchip gespeicherten Information entsprechend der Trägerfrequenz der Antenne 3 Energie vom Lesegerät in die Antenne eingekoppelt wird. Die Zerstörung der Antenne 3 im Bereich der Sollbruchstelle 4 führt dazu, daß die Information, welche im Halbleiterchip 2 über die Ware gespeichert ist, nur solange an das Lesegerät übertragen und ausgewertet werden kann, wie nicht vom Lesegerät die zur Zerstörung der Antenne 3 ausreichende Energie in die Antenne eingekoppelt wird. Bei weiteren Lesezyklen ist das Warenetikett aufgrund der Zerstörung der Antenne 3 nicht mehr lesbar. Die im erfindungsgemäßen Warenetikett gespeicherte Information ist also nur eine gewünschte Anzahl von Lesezyklen auswertbar.

Fig. 2 zeigt eine weitere Ausführungsform eines erfindungsgemäßen Warenetiketts. In dieser Figur wie in allen nachfolgenden Figuren bezeichnen gleiche Bezugszeichen gleiche Teile wie in Fig. 1.
Das in Fig. 2 dargestellte Warenetikett unterscheidet sich von dem in Fig. 1 gezeigten durch die Ausbildung der Antenne 3. Anstelle einer Stabantenne ist hier eine Antennenspule auf den Grundkörper 5 aufgedruckt. Der Halbleiter 2 ist in den Grundkörper 5 eingebettet, und die Kontakte sind an einer Oberfläche des Grundkörpers 5 herausgeführt, um dort mit der Antenne, welche kurzgeschlossen ist, elektrisch leitend kontaktiert werden zu können.
Alternativ ist es möglich, auch die Antennenspule 3 im Grundkörper 5 einzubetten.

Fig. 3 zeigt ein Warenetikett, in dem eine Stabantenne 6 und eine Antennenspule 3 miteinander kombiniert sind, um eine höhere Ubertragungsreichweite zu ermöglichen.
Stabantenne 6 und Halbleiterchip 2, der mit der Stabantenne elektrisch leitend kontaktiert ist, sind in die Gießfolie des Grundkörpers 5 eingebettet. Antennenspule 3, welche die verbesserte Reichweite ermöglicht, ist auf der Rückseite des Grundkörpers 5 aufgedruckt. Der in der Fig. 3 links befindliche Schenkel der in sich geschlossenen Antennenspule 3 verläuft unterhalb der Stabantenne 6. Auf diese Weise kann eine kapazitive Kopplung beider Antennen erreicht werden. Die Sollbruchstelle 4 ist in der Antennenspule 3 ausgebildet.

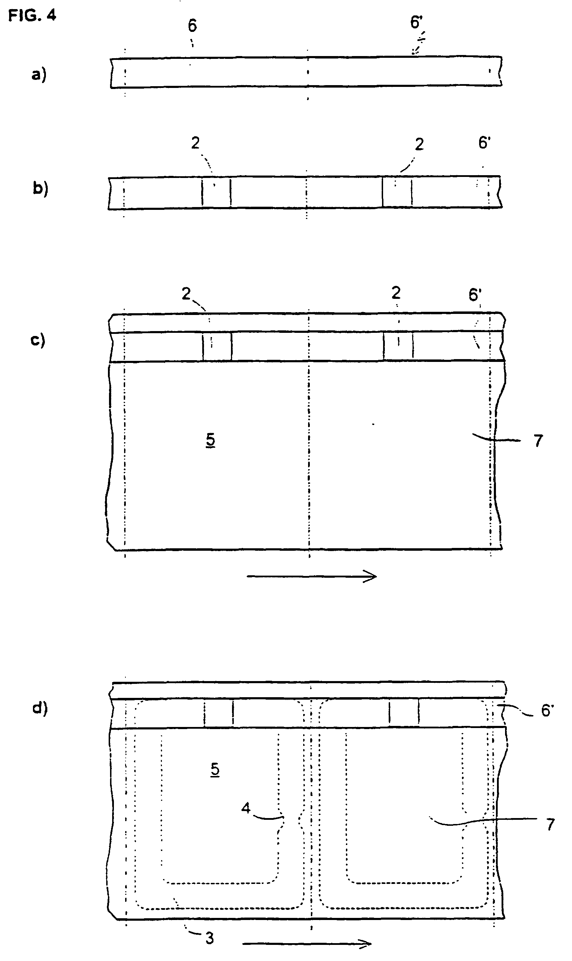

In Fig. 4 ist das erfindungsgemäße Verfahren zur Herstellung eines Warenetiketts veranschaulicht. Das Verfahren soll am Beispiel der Herstellung des in Fig. 3 dargestellten Warenetiketts beschrieben werden.
Als Vorstufe der Stabantenne 6 dient ein Antennenband 6', welches mehrere mit den Stirnseiten aneinanderstoßende Stabantennen 6 umfaßt (Fig. 4a)). In einem ersten Schritt werden die Halbleiterchips 2 auf dem Antennenband 6' befestigt, und zwar derart, daß pro Stabantenne ein Halbleiterchip 2 vorhanden ist. Außerdem werden die Halbleiterchips mit der jeweils zugehörigen Stabantenne 6 elektrisch leitend kontaktiert. Dies kann zweckmäßig im selben Schritt wie die Befestigung der Halbleiterchips auf den Stabantennen erfolgen. Ist die Antennenvorstufe 6' ein Antennenfaden oder Antennenband, welches aus einem leitfähigen Kunststoff hergestellt ist, erfolgen Befestigung und Kontaktierung zweckmäßig mit einem elektrisch leitfähigen Klebstoff.
In einem nächsten Schritt (Fig. 4c)) wird die in Fig. 4b) hergestellte Stabantennenvorstufe in eine Gießfolie 7 eingebettet. Diese Gießfolie 7 umfaßt mehrere Warenetikett-Grundkörper 5, welche durch die Punkt-Strich-Linien angedeutet sind. Die Stabantennenvorstufe wird derart in der Gießfolie eingebettet, daß pro Grundkörper 5 eine Stabantenne 6 mit einem Halbleiterchip 2 vorhanden ist. Herstellung und Bearbeitung der Gießfolie 7 erfolgen zweckmäßig mit den für die Herstellung von diesen Folien vorgesehenen Vorrichtungen. Die Maschinenrichtung bei der Herstellung und Bearbeitung ist in Fig. 4c) und d) mit Pfeilen angedeutet.

Nach dem Einbetten der Stabantennenvorstufe in die Gießfolie wird auf eine Oberfläche der Folie pro in der Folie umfaßtem Grundkörper der Warenetiketten eine Antennenspule 3 aufgedruckt. Dadurch wird die in Fig. 4d) dargestellte Zwischenstufe erhalten.

Wenn die Warenetiketten als Klebeetiketten verwendet werden sollen, kann anschließend an den Aufdruck der Antennenspulen 3 eine der Oberflächen der Gießfolie 7 noch mit einer Klebstoffschicht beschichtet werden.

Abschließend werden die einzelnen Warenetiketten durch Stanzen entlang der Punkt-Strich-Linien voneinander getrennt. Falls erwünscht, können die erfindungsgemäßen Warenetiketten bedruckt oder mit einer bedruck- oder beschriftbaren oder bereits beschrifteten Schicht überzogen werden. Außerdem kann die Klebschicht mit einer Abziehschicht versehen werden. Zweckmäßig erfolgen diese Schritte ebenfalls vor dem Vereinzeln der jeweiligen Warenetiketten, da sich bei dieser Verfahrensschrittabfolge die Herstellung vereinfachen läßt.

## Patentansprüche

1. Warenetikett (1), welches einen Halbleiterchip (2) sowie eine Antenne (3) umfaßt, mittels derer im Halbleiterchip gespeicherte Information über die Ware an ein Lesegerät übertragbar ist,
**dadurch gekennzeichnet,**
**daß** die Antenne eine Sollbruchstelle (4) aufweist, in deren Bereich die Antenne beim Lesevorgang durch vom Lesegerät einbringbare Energie zerstörbar ist, so daß das Warenetikett nach dem Einbringen der Energie nicht mehr lesbar ist.

2. Warenetikett gemäß Anspruch 1,
**dadurch gekennzeichnet,**
**daß** die Antenne (3) eine Stabantenne ist.

3. Warenetikett gemäß Anspruch 1,
**dadurch gekennzeichnet,**
**daß** die Antenne (3) eine Antennenspule ist.

4. Warenetikett gemäß einem der Ansprüche 1 bis 3,
**dadurch gekennzeichnet,**
**daß** es eine weitere Antenne (6) umfaßt.

5. Warenetikett gemäß Anspruch 4,
**dadurch gekennzeichnet,**
**daß** es eine Antennenspule (3) aufweist, welche mit einer Stabantenne (6) kapazitiv gekoppelt ist.

6. Warenetikett gemäß Anspruch 5,
**dadurch gekennzeichnet,**
**daß** die Sollbruchstelle (4) in der Antennenspule (3) ausgebildet und letztere kurzgeschlossen ist.

7. Warenetikett gemäß Anspruch 5 oder 6,
**dadurch gekennzeichnet,**
**daß** der Halbleiterchip (2) mit der Stabantenne (6) elektrisch leitend kontaktiert ist.

8. Warenetikett gemäß einem der Ansprüche 1 bis 7,
**dadurch gekennzeichnet,**
**daß** die Sollbruchstelle (4) in einer Verengung des Antennenquerschnitts besteht.

9. Warenetikett gemäß einem der Ansprüche 2 bis 8,
**dadurch gekennzeichnet,**
**daß** als Stabantenne ein Faden oder Band aus elektrisch leitfähigem Kunststoff verwendet wird.

10. Warenetikett gemäß einem der Ansprüche 1 bis 9,
**dadurch gekennzeichnet,**
**daß** es als Grundkörper (5) eine Folie aus Kunststoff und insbesondere eine Gießfolie besitzt.

11. Warenetikett gemäß Anspruch 9 oder 10,
**dadurch gekennzeichnet,**
**daß** die Stabantenne (6) in den Grundkörper (5) eingebettet ist.

12. Warenetikett gemäß einem der Ansprüche 9 bis 11,
**dadurch gekennzeichnet,**
**daß** der Halbleiterchip (2) in den Grundkörper (5) eingebettet ist.

13. Warenetikett gemäß einem der Ansprüche 5 bis 12,
**dadurch gekennzeichnet,**
**daß** die Antennenspule (3) auf den Grundkörper (5) aufgedruckt ist.

14. Warenetikett gemäß einem der Ansprüche 1 bis 13,
**dadurch gekennzeichnet,**
**daß** eine seiner Oberflächen mit einem Klebstoff beschichtet ist.

15. Warenetikett gemäß Anspruch 14,
**dadurch gekennzeichnet,**
**daß** es so ausgebildet ist, daß es nicht einstückig von der gekennzeichneten Ware entfernbar ist.

16. Verfahren zur Herstellung eines Warenetiketts gemäß einem der Ansprüche 1 bis 15,
**dadurch gekennzeichnet,**
**daß** es die folgenden Schritte umfaßt:
a) Befestigen von Halbleiterchips (2) auf einem mehrere Stabantennen (6) umfassenden Antennenfaden oder Antennenband (6') und Herstellen elektrisch leitender Kontakte zwischen Halbleiterchips (2) und der jeweils zugehörigen Stabantenne (6),
b) Herstellen einer mehrere Warenetikett-Grundkörper (5) umfassenden Gießfolie (7) derart, daß beim Gießen der Folie die in Schritt a) hergestellte Stabantennenvorstufe so in die Folie eingebettet wird, daß pro Grundkörper (5) eine Stabantenne (6) mit einem Halbleiterchip (2) vorhanden ist, und
c) Vereinzeln der Warenetiketten.

17. Verfahren gemäß Anspruch 16,
**dadurch gekennzeichnet,**
**daß** vor Schritt c) eine weitere Antenne (3) auf eine Oberfläche des Grundkörpers (5) aufgedruckt wird.

18. Verfahren gemäß Anspruch 16 oder 17,
**dadurch gekennzeichnet,**
**daß** vor Schritt c) und gegebenenfalls nach dem Aufdrucken der weiteren Antenne (3) eine Klebstoffschicht auf eine der Oberflächen des Grundkörpers aufgebracht wird.

19. Verfahren gemäß einem der Ansprüche 16 bis 18,
**dadurch gekennzeichnet,**
**daß** Schritt c) mit Hilfe eines Stanzvorganges erfolgt.

20. Verwendung des Warenetiketts gemäß einem der Ansprüche 1 bis 15 als fälschungssicheres Etikett, für die kontaktlose Identifikation von Waren insbesondere bei der Inventur und für die Waren- , insbesondere Diebstahlsicherung.

## Claims

1. A goods label (1), which comprises a semiconductor chip (2) and an antenna (3), by means of which information stored in the semiconductor chip, about the goods, can be transmitted to a reading device, **characterized in that** the antenna has a predetermined breaking point (4), in the region of which the antenna can be destroyed during the reading operation by energy that can be introduced by the reading device, so that the goods label is no longer legible following the introduction of the energy.

2. The goods label as claimed in claim 1, **characterized in that** the antenna (3) is a rod antenna.

3. The goods label as claimed in claim 1, **characterized in that** the antenna (3) is an antenna coil.

4. The goods label as claimed in one of claims 1 to 3, **characterized in that** it comprises a further antenna (6).

5. The goods label as claimed in claim 4, **characterized in that** it comprises an antenna coil (3), which is coupled capacitively to. a rod antenna (6).

6. The goods label as claimed in claim 5, **characterized in that** the predetermined breaking point (4) is formed in the antenna coil (3) and the latter is short-circuited.

7. The goods label as claimed in claim 5 or 6,
**characterized in that** electrically conductive contact is produced between the semiconductor chip (2) and the rod antenna (6).

8. The goods label as claimed in one of claims 1 to 7, **characterized in that** the predetermined breaking point (4) consists in a narrowing of the antenna cross section.

9. The goods label as claimed in one of claims 2 to 8, **characterized in that** a filament or strip of electrically conductive plastic is used as the rod antenna.

10. The goods label as claimed in one of claims 1 to 9, **characterized in that** it possesses a plastic film and, in particular, a cast film as the base element (5).

11. The goods label as claimed in claim 9 or 10, **characterized in that** the rod antenna (6) is embedded in the base element (5).

12. The goods label as claimed in one of claims 9 to 11, **characterized in that** the semiconductor chip (2) is embedded in the base element (5).

13. The goods label as claimed in one of claims 5 to 12, **characterized in that** the antenna coil (3) is printed onto the base element (5).

14. The goods label as claimed in one of claims 1 to 13, **characterized in that** one of its surfaces is coated with an adhesive.

15. The goods label as claimed in claim 14, **characterized in that** it is formed in such a way that it cannot be removed in one piece from the goods identified.

16. A method of producing a goods label as claimed in one of claims 1 to 15, **characterized in that** it comprises the following steps:
a) fixing semiconductor chips (2) to an antenna filament or antenna strip (6') comprising a plurality of rod antennas (6) and producing electrically conductive contacts between semiconductor chips (2) and the respectively associated rod antenna (6),
b) producing a cast film (7) comprising a plurality of goods label base elements (5) in such a way that during the casting of the film, the rod antenna preliminary stage produced in step a) is embedded in the film in such a way that for each base element (5) there is a rod antenna (6) with a semiconductor chip (2), and
c) separating the goods labels.

17. The method as claimed in claim 16, **characterized in that** before step c), a further antenna (3) is printed onto a surface of the base element (5).

18. The method as claimed in claim 16 or 17, **characterized in that** before step c) and, if appropriate, following the printing of the further antenna (3), an adhesive layer is applied to one of the surfaces of the base element.

19. The method as claimed in one of claims 16 to 18, **characterized in that** step c) is carried out with the aid of a punching operation.

20. The use of the goods label as claimed in one of claims 1 to 15 as a label which is secure against forgery, for the non-contact identification of goods, in particular during inventory and for safeguarding the goods, in particular for anti-theft safeguarding.

## Revendications

1. Étiquette pour marchandise (1) qui comprend une puce en semiconducteur (2) ainsi qu'une antenne (3) à l'aide de laquelle les informations sur la marchandise enregistrées dans la puce en semiconducteur peuvent être transmises à un lecteur, **caractérisée en ce que** l'antenne présente un point de rupture voulu (4) dans la zone duquel l'antenne peut être détruite lors de l'opération de lecture par l'énergie applicable par le lecteur de manière à ce que l'étiquette pour marchandise ne soit plus lisible après l'application de l'énergie.

2. Étiquette pour marchandise selon la revendication 1, **caractérisée en ce que** l'antenne (3) est une antenne tige.

3. Étiquette pour marchandise selon la revendication 1, **caractérisée en ce que** l'antenne (3) est une bobine d'antenne.

4. Étiquette pour marchandise selon l'une des revendications 1 à 3, **caractérisée en ce qu'**elle comprend une antenne supplémentaire (6).

5. Étiquette pour marchandise selon la revendication 4, **caractérisée en ce qu'**elle présente une bobine d'antenne (3) qui est couplée de manière capacitive avec une antenne tige (6).

6. Étiquette pour marchandise selon la revendication 5, **caractérisée en ce que** le point de rupture voulu (4) est façonné dans la bobine d'antenne (3) et cette dernière est court-circuitée.

7. Étiquette pour marchandise selon la revendication 5 ou 6, **caractérisée en ce que** la puce en semiconducteur (2) est en contact électrique avec l'antenne tige (6).

8. Étiquette pour marchandise selon l'une des revendications 1 à 7, **caractérisée en ce que** le point de rupture voulu (4) consiste en un rétrécissement de la section de l'antenne.

9. Étiquette pour marchandise selon l'une des revendications 2 à 8, **caractérisée en ce que** l'antenne tige utilisée est un fil ou une bande en matière plastique conductrice.

10. Étiquette pour marchandise selon l'une des revendications 1 à 9, **caractérisée en ce qu'**elle possède comme corps de base (5) un film en matière plastique et plus particulièrement un film coulé.

11. Étiquette pour marchandise selon la revendication 9 ou 10, **caractérisée en ce que** l'antenne tige (6) est intégrée dans le corps de base (5).

12. Étiquette pour marchandise selon l'une des revendications 9 à 11, **caractérisée en ce que** la puce en semiconducteur (2) est intégrée dans le corps de base (5).

13. Étiquette pour marchandise selon l'une des revendications 5 à 12, **caractérisée en ce que** la bobine d'antenne (3) est imprimée sur le corps de base (5).

14. Étiquette pour marchandise selon l'une des revendications 1 à 13, **caractérisée en ce que** l'une de ses surfaces est enduite d'un adhésif.

15. Étiquette pour marchandise selon la revendication 14, **caractérisée en ce qu'**elle est configurée de manière à ne pas pouvoir être retirée d'une seule pièce de la marchandise identifiée.

16. Procédé de fabrication d'une étiquette pour marchandise selon l'une des revendications 1 à 15, **caractérisé en ce qu'**il comprend les étapes suivantes :
a) Fixation de puces en semiconducteur (2) sur un fil d'antenne ou une bande d'antenne (6') comprenant plusieurs antennes tiges (6) et établissement de contacts électriques entre les puces en semiconducteur (2) et l'antenne tige (6) respectivement associée,
b) Fabrication d'un film coulé (7) comprenant plusieurs corps de base d'étiquette pour marchandise (5) de manière à ce que l'étage préliminaire d'antenne tige fabriqué à l'étape a) soit intégré dans le film lors du coulage du film de manière à ce qu'il existe une antenne tige (6) munie d'une puce en semiconducteur (2) pour chaque corps de base (5), et
c) Séparation des étiquettes pour marchandise.

17. Procédé selon la revendication 16, **caractérisé en ce qu'**une antenne supplémentaire (3) est imprimée sur une surface du corps de base (5) avant l'étape c).

18. Procédé selon la revendication 16 ou 17, **caractérisé en ce qu'**une couche d'adhésif est appliquée sur l'une des surfaces du corps de base avant l'étape c) et, le cas échéant, après l'impression de l'antenne supplémentaire (3).

19. Procédé selon l'une des revendications 16 à 18, **caractérisé en ce que** l'étape c) est réalisée à l'aide d'une opération de matriçage.

20. Utilisation d'une étiquette pour marchandise selon l'une des revendications 1 à 15 en tant qu'étiquette infalsifiable pour l'identification sans contact de marchandises, notamment lors de l'inventaire et pour la protection des marchandises, plus particulièrement leur protection contre le vol.
